# EUROPEAN PATENT APPLICATION

(11) **EP 3 574 754 A1**
(43) Date of publication of application: **04.12.2019**
(21) Application number: 18175081.1
(22) Date of filing: 30.05.2018
(51) Int. Cl.: A01K 73/045

(54) **A POSITIONAL CONTROL SYSTEM FOR A TRAWL DOOR**

(71) Applicant: Volu Ventis ApS, 8600 Silkeborg (DK); P/F Vónin, 530 Fuglafjørdur (FO)
(72) Inventor: Hjort, Søren, 8600 Silkeborg (DK)
(74) Representative: Zacco Denmark A/S

(57) **Abstract**

A trawl door (1) is disclosed, comprising two or more hydrofoil elements (2), cross-sectional stiffeners (3), front-towing attachment facilities (4), and rear-towing attachment facilities (5), wherein the trawl door further comprises a positional control system arranged to be able to change the equilibrium position of the trawl door within the water by shifting the Centre of Gravity (CoG) of the trawl door. Furthermore, different uses of such a trawl door are disclosed.

## Description

The present invention relates to a system for controlling the position of a trawl door during trawling operation, for instance when a fishing vessel tows a set of trawl doors consisting of a starboard and a port trawl door, which in turn tow a trawl for catching fish, shrimps or other forms of seafood.

### Background of the invention

For many decades, trawling has been used for catching fish in the ocean on an industrial scale. Other methods can be used if the fish concentration is very high or if the amount of fish to be caught is relatively low. Very often, trawling is the method of choice, and it has proven well suited for upscaling. Large modern trawlers are highly effective units where not only the catching facility, but also fish processing and packaging facilities are on board.

Along with the general industrialisation of the entire process of delivering fish and sea food to the consumer market has come a demand for improved efficiency: Less time and less energy used to catch the fish/seafood.

One method for fulfilling this need has been upscaling: Use of larger trawlers, that will catch the fish/seafood in less time and with less fuel consumption per catch unit, e.g. litres of fuel per tonne fish.

Another method used for increasing the catch efficiency is the sonar equipment implemented on every modern trawler, by which fish type, fish density and location in the water can be accurately determined. This enables the skipper controlling his vessel from the wheelhouse (bridge) to have knowledge of the fish to be caught, even before it is caught in by the trawl. Uncatchable fish is detected if/when the sonars detect fish at a depth different from current depth of the trawl. A limited depth adjustment of the trawl is possible by increasing/reducing the lengths of the two wires towing the trawl doors, but depth change response from the trawl doors is very slow, and the wire length change will also impact the door spread (distance between the two trawl doors), which is sub-optimal for the shape of the trawl towed by the trawl doors.

Other disadvantages of conventional trawl doors, where improved control of the trawl doors' position in the water is desirable are:
- During turns, e.g. 180 degree turns, the inner trawl door tends to go deep and the outer trawl door tends to go high in the water, resulting in trawl skewness and undesirable wire tension.
- When trawling in cross-flow conditions with a sea current perpendicular to the towing direction, the cross-flow will make the starboard and port trawl door operate at different angles of attack (i.e. different angles between the respective trawl doors and the resulting velocity of the water relative to the trawl doors) resulting in one trawl door going deeper and the other going higher in the water.
- When trawling very close to the sea surface, it is difficult to make the trawl doors maintain a depth of just a few meters below the surface.
- When bottom trawling and the trawl doors are in constant contact with the seabed, each of them carves a damaging groove in it when being dragged forward. Less environmental damage would be exerted and less energy consumed if the trawl doors could maintain a fixed height slightly above the seabed but with no direct physical impact between trawl door and seabed.

### Brief description of the invention

It is an object of the present invention to provide a solution for obtaining the desired controllability of the trawl door's position in the water, in which the above-mentioned disadvantages known in the art are overcome.

The invention relates to a trawl door comprising two or more hydrofoil elements, cross-sectional stiffeners, front-towing attachment facilities, and rear-towing attachment facilities (5), wherein the trawl door further comprises a positional control system arranged to be able to change the equilibrium position of the trawl door within the water by shifting the Centre of Gravity (CoG) of the trawl door.

When the trawl door is towed through the water and a shift of the CoG changes the equilibrium position of the trawl door within the water, the force of the water is caused to meet the trawl door at other angles, thereby enabling control of the trawl door's position in the water.

Thus, the invention exploits the ability to angle the trawl door so that the hydrodynamic forces working on the trawl door changes direction relative to the trawl door. It should be remembered that trawl doors are basically vertically operating hydrodynamic wings, where the resulting force from the water onto the trawl door is directed mostly outwards, such that the two trawl doors of a set of trawl doors pull away from each other, thereby opening the towed trawl in the lateral direction. By controlling the vertical trawl door angles, the vertical component of the 3-dimensional hydrodynamic force on the trawl door can be controlled, both in direction (upward/downward) and in magnitude.

In an embodiment of the invention, the change of the equilibrium position of the trawl door is established by changing the pitch angle.

The pitch angle of the operating trawl door is defined just like the pitch angle of an aircraft wing. As mentioned, conceptually, a trawl door is a hydrodynamic wing being towed horizontally through the water by the towing vessel. Increase of the pitch angle will make the trawl door upper end rotate a little aft and the lower end a little forward, such that the trawl door will tend to go higher in the water. Contrarily, a decrease of the pitch angle will make the trawl door upper end rotate a little forward and the lower end a little aft, such that the trawl door will tend to go deeper in the water.

In an embodiment of the invention, the change of the equilibrium position of the trawl door is established by changing the roll angle.

The roll angle of the operating trawl door is defined just like the roll angle of an aircraft wing. Increase of the roll angle will make the trawl door upper end rotate a little inwards towards the other trawl door, and the lower end a little outwards. Because the spreading force is always perpendicular to the outward surface of the trawl door, such a change of the roll angle will change the vertical component of the spreading force and the trawl door will tend to go higher in the water. Contrarily, a decrease of the roll angle will make the trawl door upper end rotate a little outwards away from the other trawl door, and the lower end a little inwards, such that the trawl door will tend to go deeper in the water.

Here and in the following, the term "spreading force" refers to the outwards lift force acting on the trawl door, causing the trawl door to move away from the other trawl door in a set of trawl doors, i.e. to spread the two trawl doors.

In an embodiment of the invention, the change of the equilibrium position of the trawl door is established by changing the roll angle and pitch angle in combination.

Controlling the position of a trawl door in the water by controlling a combination of its roll and pitch angles is a straightforward extension of the two previous embodiments.

In an embodiment of the invention, the shift of the CoG is provided by shifting a position of a shiftable mass placed within the trawl door.

A shift of the Center of Gravity (CoG) of the trawl door is most easily accomplished if the shiftable mass, which is a part of the trawl door and whose shiftable position is controllable, is heavy. When being moved, a heavy shiftable mass will impact the CoG of the entire trawl door relatively more than a lighter shiftable mass. Thus, the idea is to use a heavy - possibly compact - shiftable mass, so that a relatively small movement is sufficient to provide a large enough shift of the CoG to make the trawl door rotate and change its roll and/or pitch angle and, thereby, find its new depth equilibrium position within the water.

In an embodiment of the invention, the shift of the CoG is arranged to be manually controlled from outside the trawl door, for instance from a towing vessel.

A manual control of the CoG movement entails that the control is executed by the skipper or more likely by crew members while the trawl door is in its idle position on the rear part of the hull. A manual CoG adjustment could be accomplished, e.g., by turning a wheel, tensioning a strap mechanism, pressing powered buttons, or in other ways. The distinguishing feature is that CoG adjustment is to be done manually or at least in immediate proximity to the trawl door, i.e. when the trawl door is not in the water.

In an embodiment of the invention, the shift of the CoG is arranged to be remotely controlled from outside the trawl door, for instance from a towing vessel.

A remote control of the CoG movement entails that the control is executed by the skipper or by a crew member while the doors are operating in the water. The remote CoG adjustment could by accomplished by the same mechanical device as with the previously mentioned manual adjustment, but the mechanical device is powered, e.g., by battery storage, and a line of communication, e.g., acoustic signals, is established between the towing vessel and the trawl door, so that all relevant control signals can be transmitted between the vessel and the trawl door. The distinguishing feature is that the CoG adjustment is to be done remotely, i.e. when the trawl door is in the water.

In an embodiment of the invention, the density of the shiftable mass is at least three, preferably at least five, times as high as the density of the remaining parts of the trawl door.

Such a configuration intensifies the changes obtained by shifting the CoG. An example of this embodiment is a trawl door manufactured largely in plastic/rubber/elastomer materials with a mass density similar to, or slightly above, the mass density of water. Such a trawl door will be nearly weight-neutral in water, and therefore a relatively little shiftable mass is needed to provide the CoG shift necessary to cause a change of the roll and/or pitch angle and the associated change of position in the water.

In an embodiment of the invention, the shiftable mass is encased in a structural enclosure, which is not necessarily waterproof and in which the shiftable mass is kept completely apart from any of the trawl door's hydrodynamically active surfaces.

Some of the advantages of structurally shielding the shiftable mass in an encased module is increased robustness and longevity. Trawl doors operate in a hostile maritime environment and are subjected to extreme forces and mechanical impacts in general during their service life.

In addition, total separation of the positional control system from the hydrodynamically active surfaces ensures that optimal hydrodynamical efficiency is maintained irrespective of how the positional control system is used. This is a benefit. An example of the opposite would be a trawl door using controllable flaps or similar for positional control, om which the trawl door hydrodynamic efficiency is compromised whenever the flaps are engaged or disengaged depending of the specific design.

In an aspect of the invention, it relates to the use of a trawl door as described above, wherein, in an operating mode, the vertical depth of the trawl door below the sea surface is set to a specified target value.

A positional control operating mode that secures a constant trawl door depth below the sea surface is useful in various frequently occurring trawling situations:
- During turns, where the doors would otherwise go deeper/higher
- When the catch location has been determined to a specific depth, e.g., by use of the sonars, and the trawl needs to accommodate to this depth.
- In cross-flow conditions where the sea cross-current would otherwise cause an uneven depth location of the two trawl doors.
- In any other situation where the skipper or a crew member wants the trawl doors to adjust to or keep a specific depth below sea level.

In an aspect of the invention, it relates to the use of a trawl door as described above, wherein, in an operating mode, the vertical height of the trawl door above the seabed is set to a specified target value.

A positional control operating mode that secures a constant trawl door height above the seabed is useful when bottom trawling:
- During normal operation to avoid environmental damaging contact between the trawl door and the seabed.
- When bottom trawling on a topographically challenging seabed with many slopes and depth variations.
- During turns
- In cross-flow conditions
- On very shallow water where conventional bottom trawl doors are known to fall over and exhibit stability problems.

In an aspect of the invention, it relates to the use of a trawl door as described above, wherein, in an operating mode, the vertical position of the trawl door in the water is specified to remain the same during different operating conditions, such as strong cross-flow, turnarounds, sharp turns, etc.
This control mode can be regarded as a less constraining variation of one of the previous control modes, where the exact depth below sea surface was specified as a control target. It will secure the desired equal level of the trawl doors, which is advantageous during turns and in cross flow conditions. Level trawl doors will cause the trawl to be ideally towed with no skewness and optimally distributed tension of wires, ropes, etc., causing less damage and improved longevity of the trawl.

In an aspect of the invention, it relates to the use of a trawl door as described above, wherein, in an operating mode, the roll angle of the trawl door is set to a specified target value.

This control mode can be regarded as an even less constraining variation of one of the previous control modes. However, if the positional control system relies on manual (i.e. not remote) control, then a specific roll angle can be pre-determined by adjusting the CoG (by positioning the shiftable mass) manually, whereas the more advanced control modes might not be possible. Still, controlling the roll angle is useful, especially when increasing operating experience/knowledge is gained about the specific relation between the position of the shiftable mass and the resulting trawl door depth.

In an aspect of the invention, it relates to the use of a trawl door as described above, wherein, in an operating mode, the pitch angle of the trawl doors is set to a specified target value.

This control mode is similar to the previous, the only difference being that the shiftable mass is implemented so that the pitch angle, not the roll angle, is the one being controlled.

### The drawings

In the following, exemplary embodiments of the invention are described in more detail with reference to the figures, of which
- Fig. 1: is a perspective view of trawl door according to an embodiment of the invention,
- Fig. 2: is a perspective rear view of the trawl door shown in Fig. 1,
- Fig. 3: is a cross-sectional view of a 3-hydrofoil configuration trawl door according to an embodiment of the invention,
- Fig. 4: is a cross-sectional view of a 4-hydrofoil configuration trawl door according to an embodiment of the invention,
- Fig. 5: is a top view of the 4-hydrofoil configuration trawl door shown in Fig. 4,
- Fig. 6: is a cross-sectional streamline visualization of the flow through the 4hydrofoil configuration trawl door shown in Fig. 4,
- Fig. 7: is a perspective view of the 4-hydrofoil configuration trawl door shown in Fig. 4,
- Fig. 8: is another perspective view of the 4-hydrofoil configuration trawl door shown in Fig. 4,
- Fig. 9: is a schematic top view showing a shiftable mass inside an enclosure according to an embodiment of the invention, arranged to control the roll angle of a trawl door,
- Fig. 10: is a schematic top view showing a shiftable mass inside an enclosure according to an embodiment of the invention, arranged to control the pitch angle of a trawl door,
- Fig. 11: is a perspective view showing a shiftable mass inside an enclosure according to an embodiment of the invention, arranged to control the roll angle of a trawl door,
- Fig. 12: is a perspective view showing a shiftable mass inside an enclosure according to an embodiment of the invention, arranged to control the pitch angle of a trawl door,
- Fig. 13a: is a perspective view of the 4-hydrofoil configuration trawl door shown in Fig. 4 with indication of a clockwise roll angle change when shifting the shiftable mass outwards,
- Fig. 13b: is a perspective view of the 4-hydrofoil configuration trawl door shown in Fig. 4 with indication of a counter-clockwise roll angle change when shifting the shiftable mass inwards,
- Fig. 14: is a perspective view of a trawler towing a set of trawl doors according to an embodiment of the invention, wherein the bridles towing the trawl are parallel rigged,
- Fig. 15: is a perspective view of a trawler towing a set of trawl doors according to an embodiment of the invention, wherein the bridles towing the trawl are V-rigged,
- Fig. 16a: is a front view of a set of trawl doors according to an embodiment of the invention, towing a trawl,
- Fig. 16b: is a side view of a set of trawl doors according to an embodiment of the invention, towing a trawl with indication of pitch angle adjustability,
- Fig. 16c: is a front view of a set of trawl doors according to an embodiment of the invention, towing a trawl with indication of roll angle adjustability,
- Fig. 17: is a cross-sectional view of a trawl door according to an embodiment of the invention with two curved-plate hydrofoils,
- Fig. 18: is a cross-sectional view of a trawl door according to an embodiment of the invention with one curved-plate hydrofoil and a regular slender hydrofoil,
- Fig. 19: is a cross-sectional view of a trawl door according to an embodiment of the invention with two regular slender hydrofoils,
- Fig. 20: is a cross-sectional view of a trawl door according to an embodiment of the invention with two regular slender hydrofoils and a thick hydrofoil, and
- Fig. 21: is a cross-sectional view of a trawl door according to an embodiment of the invention with five curved-plate hydrofoils and a thick hydrofoil.

### Detailed description of the invention

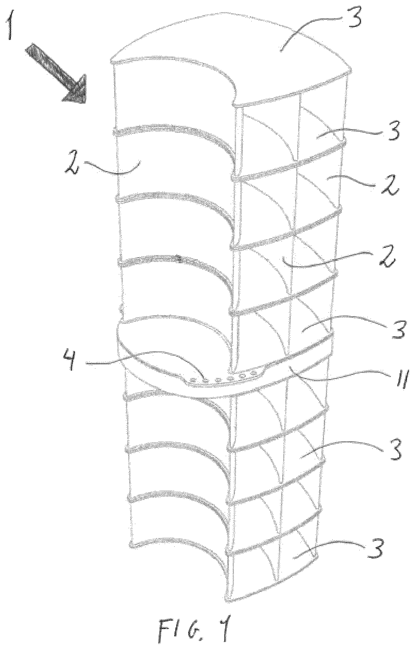

Fig. 1 illustrates a trawl door 1 with hydrofoils 2, cross-sectional stiffeners 3, front-towing attachment facility 4 (exemplified with simple holes), and a shiftable mass enclosure 11, which contains the shiftable mass 10 (not shown in this figure). The hydrodynamic forces are created by the hydrofoils 2, while the cross-sectional stiffeners 3 are substantially aligned with the towing direction and serve the purpose of structurally joining the hydrofoils 2 together. The shiftable mass enclosure 11 with the shiftable mass may contain cavities that are expected to fill with water during normal trawling operation. A watertight shiftable mass enclosure 11 or a less enclosing shiftable mass enclosure 11, in which the inside components, such as power supply, actuator, signal transducer, and the shiftable mass, are fully or partly visible, can also be used.

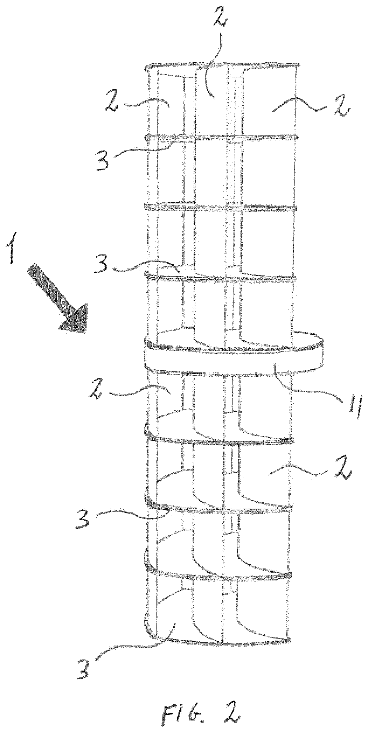

Fig. 2 illustrates the same trawl door 1 in perspective as seen from the rear. Compared to regular trawl doors known within the art, the trawl door 1 with the shiftable mass 10 is rather thick in shape in the sense that the hydrofoils 2 are positioned above each other rather than behind each other as is normally seen in regular trawl doors. It is not a requirement for the trawl door 1 that the hydrofoils 2 are positioned above each other, but it allows the shiftable mass 10 to move across a longer distance (from one end position to the other) than would have been the case if the hydrofoils 2 had been positioned behind each other. Thereby, the impact on the CoG by moving the shiftable mass is increased, and the positional control ability of the trawl door 1 is consequently improved.

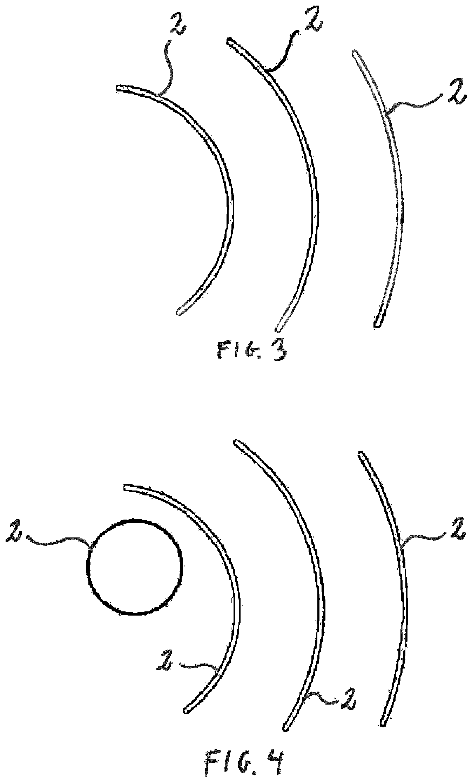

Fig. 3 illustrates a cross-section of the hydrofoil elements 2 from the trawl door 1 of Figs. 1 and 2. In this example, there are three hydrofoils 2, but there could be any other number. Also note that although the hydrofoils 2 are positioned to be stacked one above the other, a more regular arrangement with the hydrofoils 2 positioned in a slightly overlapping sequence one behind the other could also be used.

Fig. 4 illustrates a cross-section of the hydrofoil elements 2 from the trawl door 1 where a very thick fourth hydrofoil 2 has been added. The advantage of such a 4-hydrofoil configuration can be multiple: It adds structural strength to the assembled trawl door 1 and it can increase the hydrodynamic lift capability of the trawl door 1.

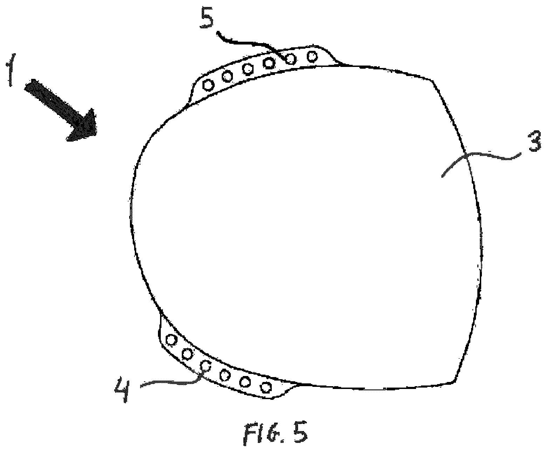

Fig. 5 illustrates a top view of the 4-hydrofoil configuration trawl door 1 where only the topmost cross-sectional stiffener 3 and the front-towing attachment facility 4 and rear-towing attachment facility 5 are visible. These attachment facilities 4, 5 are shown as simple holes, through which shackles or chain elements connected to the towing wires or bridles 9 (not shown) can be inserted. The exact type of attachment facility used to connect the trawl door 1 to the towing device is not important.

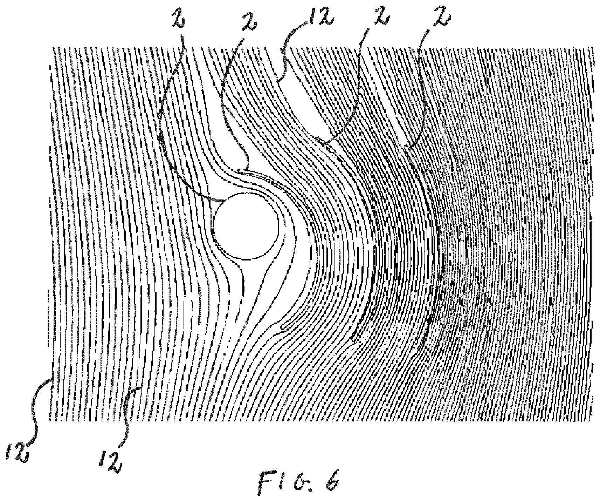

Fig. 6 illustrates the same cross-section as Fig. 4 with four hydrofoil elements 2. Flow visualization is displayed with streamlines 12, which are the imaginary flow path patterns of the water passing the trawl door 1 under normal steady operating conditions when towing the trawl door 1 through the water.

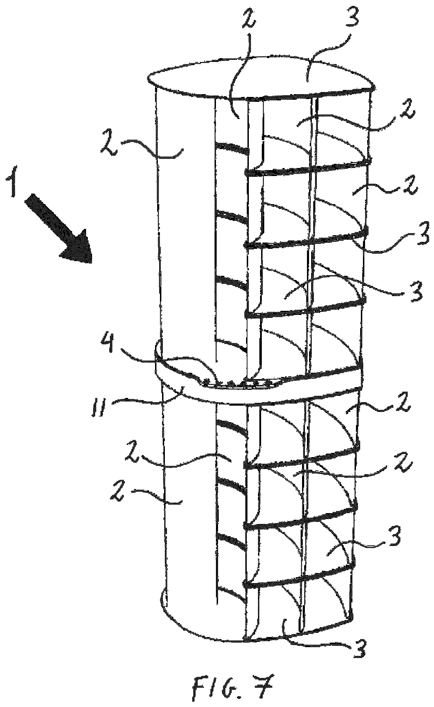

Fig. 7 illustrates a front perspective view of the 4-hydrofoil configuration trawl door displayed in Fig. 4-6. There are eight cross-sectional stiffeners 3, but the number, shape, and composition of such cross-sectional stiffeners 3 could be different, since the only purpose of the cross-sectional stiffeners 3 is to provide structural strength and integrity to the trawl door 1.

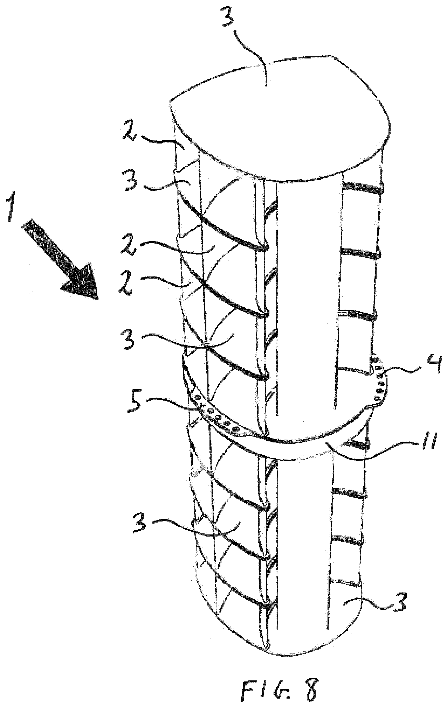

Fig. 8 illustrates the 4-hydrofoil configuration trawl door 1 from another angle. The hydrofoils 2, the cross-sectional stiffeners 3, the front-towing attachment facility 4, the rear-towing attachment facility 5, and the shiftable mass enclosure 11 are displayed. If not annotated, it would not be obvious which of the wire/bridle attachment facilities 4, 5 is for front-towing and which is for rear-towing. In principle, even a symmetric cross-sectionional hydrofoil configuration could be used, in which case the front-towing attachment facility 4 and rear-towing attachment facility 5 would be completely symmetrical to one another.

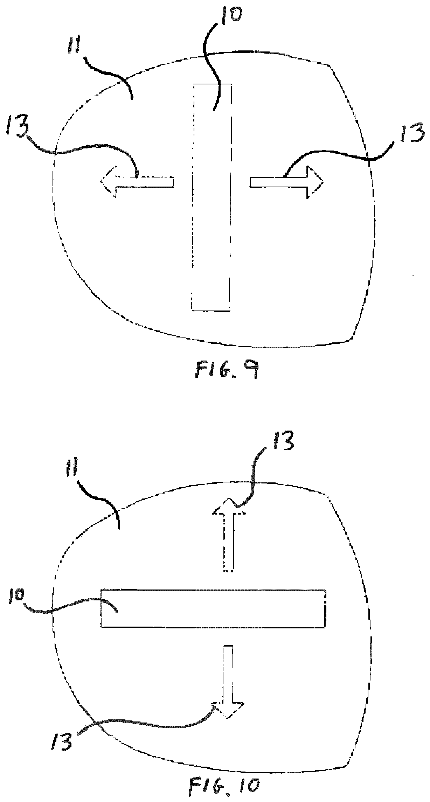

Fig. 9 is a schematic top view of the shiftable mass 10 inside the shiftable mass enclosure 11, in which the adjustment directions, as indicated by the imaginary directional indicators 13, are oriented such that the roll angle of the trawl door 1 is controlled. The shape of the shiftable mass enclosure 11 as well as the shiftable mass 10 is not very relevant. The important detail is the presence of a heavy shiftable mass 10m which can be shifted, either manually or with a powered device when the trawl door 1 is in idle position on the trawler, or remotely when the trawl door 1 is being towed, such that the CoG of the trawl door 1 is shifted, which makes the trawl door equilibrium position change so that said trawl door will find a new position in the water. Thereby, controlling the shift of the CoG entails positional control of the trawl door 1.

Fig. 10 is a schematic top view of the shiftable mass 10 inside the shiftable mass enclosure 11, in which the adjustment directions, as indicated by the imaginary directional indicators 13 are oriented such that the pitch angle of the trawl door 1 is controlled. The other details are similar to Fig. 9. The roll and pitch angles for a trawl door 1 is defined exactly as roll and pitch angles for an aircraft: Roll is the angular rotation around a horizontal axis parallel to the trawl towing direction, and pitch is the angular rotation around a horizontal axis perpendicular to the trawl towing direction.

Other ways of moving the shiftable mass to shift the CoG of the trawl door 1 may also be used: Rotational movement, combination of translational and rotational movement, etc.

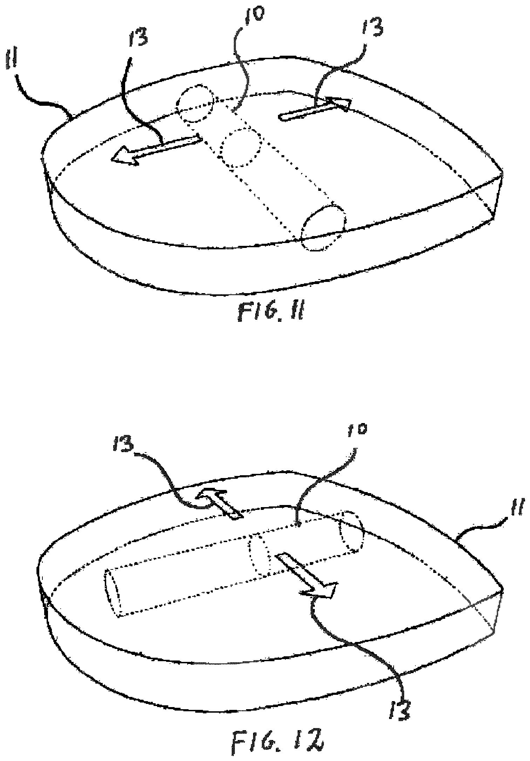

Fig. 11 is a perspective view of the shiftable mass 10 inside the shiftable mass enclosure 11, in which the adjustment directions, as indicated by the imaginary directional indicators 13 are oriented such that the roll angle of the trawl door 1 is controlled, just like on Fig. 9. Hatched lines indicate hidden edges.

Fig. 12 is a perspective view of the shiftable mass 10 inside the shiftable mass enclosure 11, in which the adjustment directions, as indicated by the imaginary directional indicators 13 are oriented such that the pitch angle of the trawl door 1 is controlled, just like on Fig. 10. Hatched lines indicate hidden edges.

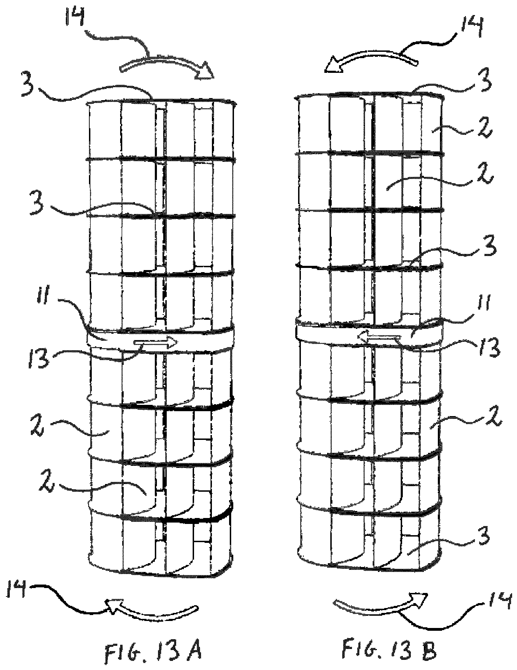

Figs. 13a and 13b are perspective views of two identical multi-hydrofoil configuration trawl doors 1. The hydrofoils 2, the cross-sectional stiffeners 3, and the shiftable mass enclosures 11 are displayed.

The imaginary directional indicator 13 on the trawl door 1 in Fig. 13a points to the right, indicating an adjustment situation, in which the shiftable mass 10 is moved to the right. The two imaginary angle adjustability indicators 14 in Fig. 13a indicate that, as the shiftable mass 10 is moved to the right, then the lower part of the trawl door 1 will rotate towards the left, and the upper part of the trawl door 1 will rotate towards the right, so that the entire trawl door 1, upon stabilizing itself in its new equilibrium position, will rotate slightly in a clockwise direction, and the trawl door 1 spreading force will change direction from laterally pure right to a combination of lateral right and vertical down, causing the trawl door 1 to deeper in the water.

The opposite adjustment manoeuvre is shown in Fig. 13b. Here, the imaginary directional indicator 13 points to the left, indicating an adjustment situation, in which the shiftable mass 10 is moved to the left. The two imaginary angle adjustability indicators 14 indicate that, as the shiftable mass 10 is moved to the left, then the lower part of the trawl door 1 will rotate towards the right, and the upper part of the trawl door 1 will rotate towards the left, so that the entire trawl door 1, upon stabilizing itself in its new equilibrium position, will rotate slightly in a counter-clockwise direction, and the trawl door 1 spreading force will change direction from laterally pure right to a combination of lateral right and vertical up, causing the trawl door to go higher in the water.

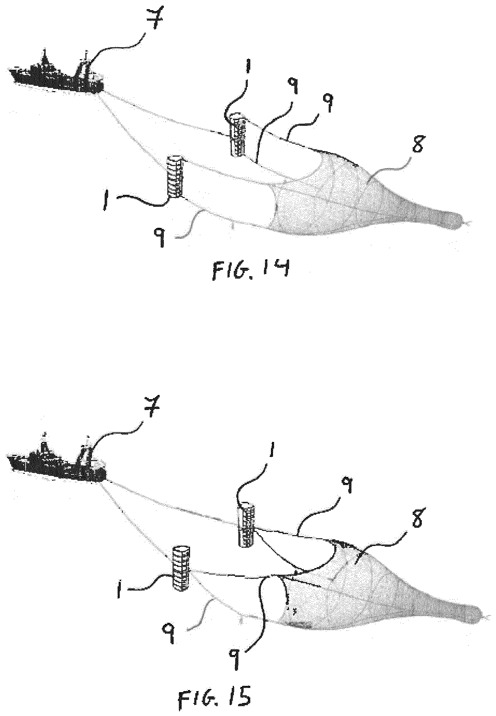

Fig. 14 is a perspective view of a towing vessel 7 towing a set of two trawl doors 1 - a starboard and a port unit - connected with bridles 9 to the trawl 8. The two bridles 9 connecting to the trawl 8 to each of the trawl doors 1 are rigged in parallel from an upper and a lower rear attachment facility 5 on each trawl door 1. Parallel rigging is widely used on trawl doors and can be used for position-controlled trawl doors 1 also. It is a potential disadvantage, however, that the traction forces of the bridles 9 may tend to counteract the positional control of the trawl door 1.

Fig. 15 is a perspective view of a towing vessel 7 towing a set of two trawl doors 1 - a starboard and a port unit - connected with bridles 9 to the trawl 8. The two bridles 9 connecting to the trawl 8 to each of the trawl doors 1 are rigged in a V-shape, in which the two bridles 9 use a common centrally placed rear attachment facility 5, or alternatively two separate but centrally placed rear attachment facilities 5, on each trawl door 1. V-rigging of different configurations are also widely used on trawl doors and can be used for position-controlled trawl doors 1 also. It is an advantage that the traction forces of the bridles 9 cannot counteract the positional control of the trawl door 1.

A combined rigging variation, in which an upper and a lower rear attachment facility 5 on each trawl door 1 is used, and where the two bridles 9 connected to a given trawl door 1 then connect in a point behind the trawl door 1, from where they continue to the trawl 8, can also be used.

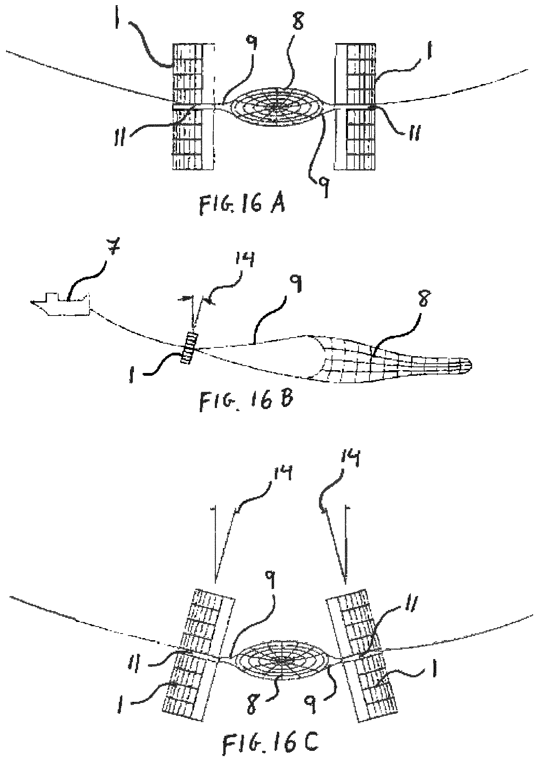

Figs. 16a-c are three illustrations of a set of towed trawl doors 1, which in turn tow a trawl 8. In Fig. 16a, which is a front view, the trawl doors 1 are positioned vertically up-down.

In Fig. 16b, which is a view from the side, the trawl doors 1 are behind each other and their positions are controlled through shifting a shiftable mass 10 (not shown) and thereby the CoG of each trawl door 1 in such a way that the pitch angle of the trawl door 1 has changed. In the illustrated example, the change of the pitch angles will make the trawl doors 1 go higher in the water.

In Fig. 16c, which is also a front view, the positions of the trawl doors 1 are controlled through shifting a shiftable mass 10 (not shown) and thereby the CoG of each trawl door 1 in such a way that the roll angle of the trawl door 1 has changed. In the illustrated example, the change of the roll angle will make the trawl doors 1 go higher in the water.

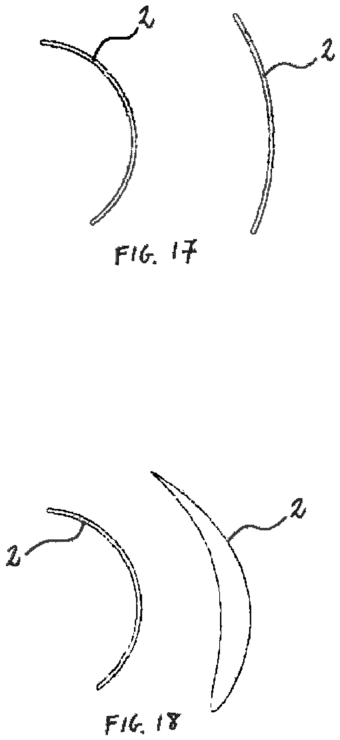

Fig. 17 illustrates a cross-section of a trawl door 1 with two hydrofoil elements 2. The hydrofoil elements 2 are of a curved-plate type and placed above each other.

Fig. 18 illustrates a cross-section of another trawl door 1 with two hydrofoil elements 2. One of the hydrofoil elements 2 is regular and the other of a curved-plate type. They are placed above each other.

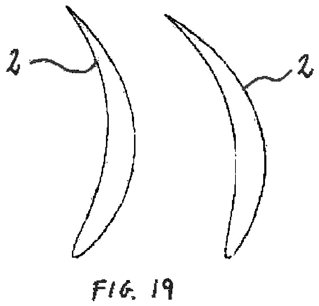

Fig. 19 illustrates a cross-section of a trawl door 1 with two hydrofoil elements 2. The hydrofoil elements 2 are regular and placed above each other.

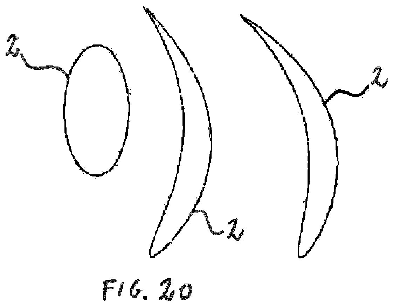

Fig. 20 illustrates a cross-section of a trawl door 1 with three hydrofoil elements 2. Two of the hydrofoil elements 2 are regular and the third is of a thick non-streamlined type.

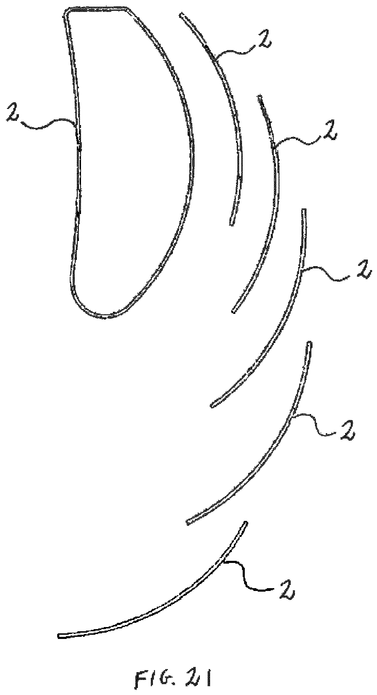

Fig. 21 illustrates a cross-section of a trawl door 1 with six hydrofoil elements 2. Five of the hydrofoil elements 2 are of a curved-plate type and the sixth is of a thick non-streamlined type.

Figs. 17-21 illustrate a number of trawl doors 1 with different hydrodynamic footprints (cross-sections) and with which the positional control concept based on the ability to shift the CoG of the trawl door 1 can be used. Basically, the concept can be used with trawl doors 1 of any kind.

In all the illustrated cross-sections in Fig. 17-21, the trawl door 1 is oriented in such a way that the towing direction is towards the bottom of the figure, potentially at a slightly skew angle.

### List of references

- 1.: Trawl door
- 2.: Hydrofoil element
- 3.: Cross-sectional stiffener
- 4.: Front-towing attachment facility
- 5.: Rear-towing attachment facility
- 6.: Gravity element
- 7.: Towing vessel
- 8.: Trawl
- 9.: Bridles
- 10.: Shiftable mass
- 11.: Shiftable mass enclosure
- 12.: Visualization streamlines
- 13.: Imaginary directional indicator
- 14.: Imaginary angle adjustability indicator

## Claims

1. A trawl door (1) comprising two or more hydrofoil elements (2), cross-sectional stiffeners (3), front-towing attachment facilities (4), and rear-towing attachment facilities (5), wherein the trawl door further comprises a positional control system arranged to be able to change the equilibrium position of the trawl door within the water by shifting the Centre of Gravity (CoG) of the trawl door.

2. The trawl door (1) according to claim 1, wherein the change of the equilibrium position of the trawl door is established by changing the pitch angle (P).

3. The trawl door (1) according to claim 1, wherein the change of the equilibrium position of the trawl door is established by changing the roll angle (R).

4. The trawl door (1) according to claim 1, wherein the change of the equilibrium position of the trawl door is established by changing the roll angle (R) and the pitch angle (P) in combination.

5. The trawl door (1) according to any of the preceding claims, wherein the shift of the CoG is provided by shifting a position of a shiftable mass (11) placed within the trawl door.

6. The trawl door (1) according to any of the preceding claims, wherein the shift of the CoG is arranged to be manually controlled from outside the trawl door, for instance from a towing vessel (7).

7. The trawl door (1) according to any of the preceding claims, wherein the shift of the CoG is arranged to be remotely controlled from outside the trawl door, for instance from a towing vessel (7).

8. The trawl door (1) according to any of the preceding claims, wherein the density of the shiftable mass (11) is at least three, preferably at least five, times as high as the density of the remaining parts of the trawl door.

9. The trawl door (1) according to any of the preceding claims, wherein the shiftable mass (11) is encased in a structural enclosure (12), which is not necessarily waterproof and in which the shiftable mass (11) is kept completely apart from any of the trawl door's hydrodynamically active surfaces.

10. The use of a trawl door (1) according to any of the preceding claims, wherein, in an operating mode, the vertical depth of the trawl door below the sea surface is set to a specified target value.

11. The use of a trawl door (1) according to any of claims 1-9, wherein, in an operating mode, the vertical height of the trawl door above the seabed is set to a specified target value.

12. The use of a trawl door (1) according to any of claims 1-9, wherein, in an operating mode, the vertical position of the trawl door in the water is specified to remain the same during different operating conditions, such as strong cross-flow, turnarounds, sharp turns, etc.

13. The use of a trawl door (1) according to any of claims 1-9, wherein, in an operating mode, the roll angle (R) of the trawl door is set to a specified target value.

14. The use of a trawl door (1) according to any of claims 1-9, wherein, in an operating mode, the pitch angle (P) of the trawl door is set to a specified target value.
